(19) **Europäisches Patentamt**

**European Patent Office**

**Office européen des brevets**

(11) **EP 0 941 630 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(51) Int Cl.⁷: **H04Q 11/04**

(21) Anmeldenummer: **97949881.3**

(22) Anmeldetag: **07.11.1997**

(86) Internationale Anmeldenummer:
**PCT/DE1997/002601**

(87) Internationale Veröffentlichungsnummer:
**WO 1998/024260 (04.06.1998 Gazette 1998/22)**

(54) **VERFAHREN ZUM STATISTISCHEN MULTIPLEXEN VON ATM-VERBINDUNGEN**

STATISTICAL MULTIPLEXING OF ATM-CONNECTIONS

PROCEDE DE MULTIPLEXAGE STATISTIQUE DE COMMUNICATIONS ATM

(84) Benannte Vertragsstaaten:
**AT BE CH DE ES FR GB IT LI NL PT SE**

(30) Priorität: **29.11.1996 DE 19649649**

(43) Veröffentlichungstag der Anmeldung:
**15.09.1999 Patentblatt 1999/37**

(73) Patentinhaber: **SIEMENS AKTIENGESELLSCHAFT**
**80333 München (DE)**

(72) Erfinder:
• **LAMPE, Dorothea**
**D-82061 Neuried (DE)**
• **WALLMEIER, Eugen**
**D-82223 Eichenau (DE)**

(56) Entgegenhaltungen:
**EP-A- 0 448 073        EP-A- 0 596 624**
**EP-A- 0 629 065        EP-A- 0 673 138**

**Beschreibung**

Die Erfindung betrifft ein Verfahren gemäß dem Oberbegriff des Patentanspruchs 1.

Bei Verbindungen, über die Informationen nach einem asynchronen Transfermodus (ATM) übertragen werden, sind in der Regel zwei Verbindungstypen definiert. So werden zum einen Verbindungen, mittels denen Informationen mit einer konstanten Bitrate (constant bitrate, CBR) übertragen werden, von Verbindungen unterschieden, über die Informationen mit einer variablen Bitrate (Variable Bit Rate, VBR) übertragen werden. Die Übertragung der Informationen erfolgt dabei in ATM-Zellen. Insbesondere bei den zuletzt gennanten Verbindungen werden die ATM-Zellen in einer zeitlich unregelmäßigen Abfolge übertragen, womit sogenannte "Bursts" auftreten. Dies bedeutet, daß die Zellen in einem kurzen Zeitintervall gehäuft übertragen werden, während in der verbleibenden Zeit keine Übertragung von Zellen stattfindet. Zur Beschreibung dieser Verbindungen werden eine Reihe von Übertragungsparametern definiert. Hierzu zählt beispielsweise die Spitzenzellenrate (Peak Cell Rate, PCR). Dabei handelt es sich um eine obere Grenze für die Anzahl der Zellen, die pro Sekunde von einer sendenden Einrichtung übertragen werden können.

Generell muß beim Aufbau einer ATM-Verbindung die sendende Einrichtung einer übergeordneten Steuereinrichtung (Call Acceptance Control) vorher festgelegte Parameter mitteilen. Dies ist erforderlich, um die Qualität der Verbindung für alle Teilnehmer (Quality of Service) sicherzustellen. Werden beispielsweise zu viele Zellen übertragen und damit die Übertragungskapazität überschritten, müssten zu viele Zellen verworfen werden. Dies ist jedoch unter allen Umständen zu vermeiden, da hiermit stets ein Verlust an Information verbunden ist. Hierzu existiert beispielsweise von Normierungsgremien die Forderung nach einer Zellverlustwahrscheinlichkeit von $10^{-10}$ einer Verbindung. Aus diesem Grund wird bereits beim Verbindungsaufbau berechnet, ob diese neue Verbindung zu bereits bestehenden Verbindungen angenommen werden kann. Ist die Übertragungskapazität bereits ausgeschöpft, wird die anfordernde Verbindung abgewiesen.

Zur Behandlung dieser Vorgänge läuft in der übergeordneten Steuereinrichtung ein Algorithmus ab, mittels dem die von der sendenden Einrichtung erhaltenen Parameter überprüft werden. Weiterhin werden diese mit bereits berechneten, die momentane Last auf der Verbindungsleitung betreffenden Parametern verglichen. Auf Basis dieser Vergleiche wird dann entschieden, ob dem neuen Verbindungswunsch entsprochen und diese Verbindung noch zugelassen werden kann. Als Parameter wird die bereits angesprochene Spitzenzellenrate (PCR) verwendet. Weiterhin wird der Steuereinrichtung von der sendenden Einrichtung bei einer Verbindung mit variabler Bitrate eine dauernd erlaubte Zellrate (sustainable cell rate, SCR) mitgeteilt. Dies ist die obere Grenze einer mittleren Zellenrate, mit der die Zellen während des Bestehens der Verbindung übertragen werden. Als weiterer Parameter sind der Steuereinrichtung die maximal mögliche Übertragungskapazität der Verbindungsleitung (Link Cell Rate, C) sowie die maximal mögliche Last auf der Verbindungsleitung ($p_0$) bekannt. Bei ersterem handelt es sich quasi um eine Materialkonstante der Verbindungsleitung, während mit der letzteren eine Größe definiert wird, mit der die maximal zulässige Summenzellenrate auf der Verbindungsleitung angegeben wird. Dies ist in der Regel 95% der maximal mögliche Übertragungskapazität der Verbindungsleitung. Nach Maßgabe dieser Parameter wird dann entschieden, ob neuen Verbindungswünschen entsprochen werden kann oder nicht.

Beim Stand der Technik haben sich zur Behandlung dieser Vorgänge eine Reihe von Verfahren herausgebildet. Als einfaches Verfahren sei hier der Peak Cell Rate Reservation Algorithmus angeführt. Dabei wird eine n-te Verbindung erst zugelassen, wenn für die (n-1) bereits bestehenden Verbindungen zuzüglich der n-ten Verbindung gilt:

$$(a) \qquad \sum_{i=1}^{n} PCR_i \leq p_0 \cdot C$$

Wird diese Bedingung nicht erfüllt, wird der Verbindungswunsch abgewiesen.

Als weiteres bekanntes Verfahren sei ferner der Sigma Rule Algorithmus angeführt. Dieses Verfahren ist in der Druckschrift "E. Wallmayer, 'Connection acceptance algorithm for ATM-Networks based on mean and peak bit rates', International Journal of Digital and Analog Communication Systems, Vol. 3, pp. 143 bis 153, 1990" beschrieben. Dabei ist dieses bekannte Verfahren eine Weiterentwicklung des Peak Cell Rate Reservation Algorithmuses. Hierbei muß zusätzlich zur Bedingung (a) noch eine weitere Bedingung (b) erfüllt sein.

$$(b) \quad \sum_{VC_i \in \text{Klasse S}} SCR_i + q(c, \text{Klasse S}) \cdot \left( \sum_{VC_i \in \text{Klasse S}} SCR_i \cdot (PCR_i - SCR_i) \right)^{1/2} \leq$$

$$P_0 \cdot C - \sum_{VC_i \in \text{Klasse P}} PCR_i$$

wobei $c = p_0 \cdot C - \Sigma PCR_i$ die freie Kapazität für Klasse S ist.

Der Bedingung (b) ist entnehmbar, daß hier die anstehenden Verbindungen in 2 Klassen aufgeteilt werden. Zu Beginn des Verbindungsaufbaus muß somit vom Sigma Rule Algorithmus entschieden werden, in welche von zwei Klassen, nämlich einer Klasse S sowie einer Klasse P, die gegebenenfalls neu hinzukommende ATM-Verbindung einzuteilen ist.

Der Klasse S werden alle virtuellen Verbindungen zugeordnet, für die ein statistisches Multiplexen gemäß des Sigma Rule Algorithmusses einen deutlichen Gewinn gegenüber dem Peak Cell Rate Reservation Algorithmus bringen würde. Dies sind in der Regel kleinbitratige Verbindungen. Als Kriterium für diese Art von Verbindungen muß für die Spitzenzellenrate und die dauernd erlaubte Zellrate aller statistisch zu multiplexenden Verbindungen folgende Bedingung erfüllt sein:

$$PCR/C < 0{,}03 \text{ und } (0{,}1 \leq SCR/PCR \leq 0{,}5)$$

Der Klasse P werden alle übrigen virtuellen Verbindungen zugeordnet.Hierzu zählen insbesondere die Verbindungen mit konstanter Bitrate. Weiterhin werden hier alle die Verbindungen zugeordnet,für die die Parameter SCR sowie PCR sehr nahe beieinander - oder sehr weit auseinanderliegen, oder die bereits eine hohe Spitzenzellenrate PCR aufweisen.Als Kriterium hierfür gilt eine Spitzenzellenrate, die größer als 3 % der maximal mögliche Übertragungskapazität der Verbindungsleitung ist.

Weiterhin ist der Bedingung (b) ein Faktor q entnehmbar. Dieser Faktor ist sowohl von der Klasse S als auch der freien Kapazität c der Klasse S abhängig.Für eine festgelegte Klasse S müssen die q(c) Werte mittels eines aufwendigen Programmes berechnet werden. Vereinfachend unter dynamischen Gesichtspunkten wird die Abhängigkeit von der Größe c durch eine Hyperbelfunktion $q(c)=q_1+q_2/c$ abgeschätzt.

Bei diesem Stand der Technik wird somit eine n-te virtuelle Verbindung $VC_n$ mit einer definierten Spitzenzellenrate $PCR_n$ sowie einer dauernd erlaubte Zellrate $SCR_n$ zu (n-1) bereits bestehenden virtuellen Verbindungen $VC_i$ mit den Parametern $SCR_i$ sowie $PCR_i$ $(1 \leq i \leq n-1)$ auf einer Verbindungsleitung zugelassen, wenn die Bedingungen (a) oder (b) erfüllt sind.

Gemäß der Bedingung (a) wird geprüft, ob die Summe der Spitzenzellenraten aller n Verbindungen auf der Verbindungsleitung kleiner oder gleich der maximal möglichen Übertragungskapazität auf der Verbindungsleitung ist. Ist dies der Fall, so kann die n-te virtuelle Verbindung angenommen werden und die Abfrage der Bedingung (b) erübrigt sich. Ist dies nicht der Fall, so wird in Bedingung (b) geprüft, ob die obere Abschätzung des Mittelwerts der Summe der Spitzenzellenraten aller Verbindungen der Klasse S zusammen mit einer Zellenrate, die sich aus der Burst-Haftigkeit aller Verbindungen der Klasse S berechnet,kleiner oder gleich der Zellrate ist, die für Klasse S Verbindungen derzeit verfügbar sind. Ist dies der Fall, so wird die n-te virtuelle Verbindung angenommen, im anderen Fall abgelehnt.

Nachteilig an diesem Stand der Technik ist, daß bei Verwendung des Sigma Rule Algorithmuses die maximale Übertragungskapazität auf der Übertragungsleitung nicht voll ausgeschöpft wird.

In der europäischen Patentanmeldung EP 0 673 138 A2 wird ein Verfahren zum Zulassen von ATM-Verbindungen offenbart. Demgemäß werden die anzunehmenden Verbindungen in Verkehrsklassen eingeteilt und berechnet, ob die neue Verbindung bezüglich ihrer Bandbreite angenommen werden kann. Damit ist aber auch hier, daß die maximale Übertragungskapazität auf der Übertragungsleitung nicht voll ausgeschöpft wird.

In der europäischen Patentanmeldung EP 0 596 624 A2 wird ebenfalls ein Verfahren zum Zulassen von ATM-Verbindungen offenbart. Auch hier werden die anzunehmenden Verbindungen in Verkehrsklassen eingeteilt. Eine Feinsteuerung in dem Sinne, daß die maximale Übertragungskapazität auf der Ubertragungsleitung voll ausgeschöpft wird, wird auch hier nicht angesprochen.

Der Erfindung liegt die Aufgabe zugrunde, einen Weg aufzuzeigen, wie die Übertragung von ATM-Zellen auf einer Verbindungsleitung noch effizienter durchgeführt werden kann.

Die Erfindung wird ausgehend vom Oberbegriff des Patentanspruch 1 durch die im Kennzeichen angegebenen Merkmale gelöst.

Vorteilhaft für die Erfindung ist insbesondere, daß die beim Stand der Technik verwendete Klasse S in mehrere Teilklassen unterteilt wird. Damit können dann vom Sigma Rule Algorithmus in effizienter Weise die für die Übertragung günstigste Klasse gewählt werden. Dies bedeutet in der Praxis eine noch feinere Zuordnung von Verbindungen zu den definierten Klassen, womit die effiziente Übertragung von ATM-Zellen auf der Verbindungsleitung weiter erhöht wird.

Vorteilhafte Weiterbildungen der Erfindung sind in den Unteransprüchen angegeben.

Die Erfindung wird im folgenden anhand eines Ausführungsbeispiels näher erläutert.

Es zeigen:

Figur 1    das erfindungsgemäße Verfahren in tabellarischer Form für lediglich eine Übertragungsgeschwindigkeit

Figur 2    das erfindungsgemäße Verfahren in tabellarischer Form für eine Mehrzahl von Übertragungsgeschwindigkeiten,

Figur 3    ein Flußdiagramm gemäß dem erfindungsgemäßen Ver fahren.

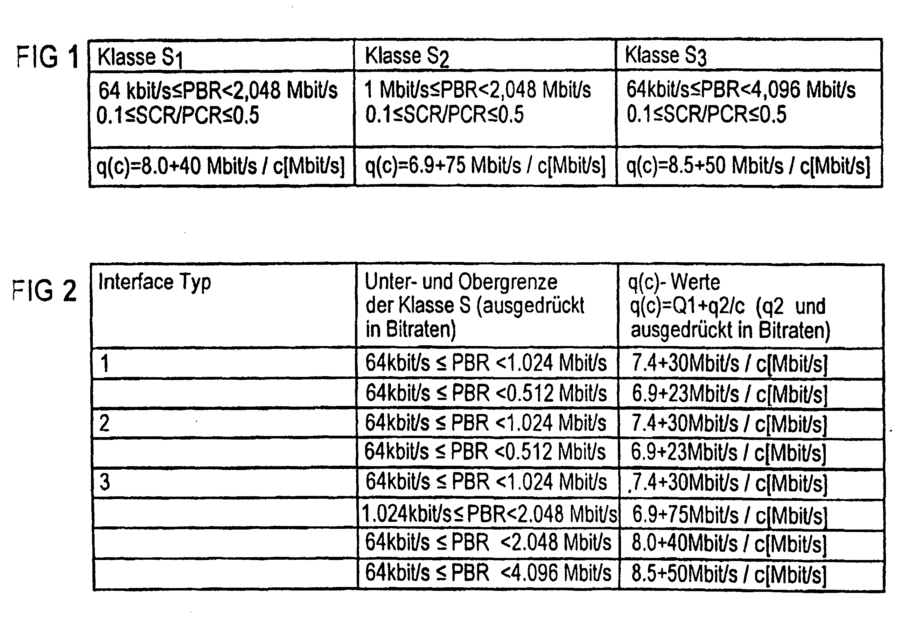

In Fig. 1 ist beispielhaft der Grundgedanke des erfindungsgemäßen Verfahrens in tabellarischer Form aufgezeigt. Dabei wird zunächst das Grundprinzip für lediglich eine Übertragungsgeschwindigkeit erläutert.

Demgemäß wird die Klasse S in eine Mehrzahl von Teilklassen $S_1$, $S_2$ und $S_3$ aufgeteilt. Beispielhaft sind lediglich 3 Teilklassen offenbart, obwohl gemäß der vorliegenden Erfindung auch eine Unterteilung in eine Vielzahl von Teilklassen vorgenommen werden kann. Der Sigma Rule Algorithmus muß somit im Falle des Eintreffens eines neuen Verbindungswunsches die Bedingungen (a) und (b) in vorliegendem Ausführungsbeispiel daraufhin überprüfen, welcher der Teilklassen die neue Verbindung zuzuordnen ist. Ist die Bedingung (a) nicht erfüllt, so muß in vorliegendem Ausführungsbeispiel die Verbindung den entsprechenden Teilklassen zugeordnet werden und Bedingung (b) höchstens 3 mal überprüft werden. Damit wird dann automatisch die günstigste Teilklasse $S_x$ gewählt.

Eine Teilklasse $S_x$ wird dabei über eine Untergrenze bzw.Obergrenze der Spitzenzellenrate PCR sowie des Verhältnisses der Übertragungsparameter SCR/PCR definiert. Gemäß der in Fig. 1 aufgezeigten Tabelle sind 3 Teilklassen sowie die zugehörigen q(c)-Werte aufgezeigt. Aus Gründen der Anschaulichkeit werden die einer Teilklasse zugehörigen Grenzen nicht in Spitzenzellenraten PCR sondern in Spitzenbitraten PBR angegeben.

Weiterhin wird bei der Funktion $q(c) = q_1 + q_2/c$ die Werte $q_2$ und c in Zellenraten ausgedrückt. Beispielsweise wird so aus

$$q(c) = 8{,}0 + 40 \text{ Mbit/s/ } c \ [Mbit\,/\,s]$$

die Funktion von $q(c) = 8{,}0 + 94339/c$ [$Zellen\,/\,s$].

Dabei wurde die Umrechnung von Mbit/s in Zellen/s folgendermaßen durchgeführt:

$$q_2 \ [Zellen\,/\,s] = q_2 \ [bit\,/\,s\,] \,/\, 53 \,/\, 8$$

sowie

$$c \ [Zellen\,/\,s] = c \ [bit\,/\,s] \,/\, 53 \,/\, 8.$$

Zur Illustration soll beispielhaft angenommen werden, daß eine Mehrzahl von virtuellen Verbindungen VC auf eine Verbindungsleitung gemultiplext werden soll. Diese sollen zum einen Spitzenbitraten PBR = 1 Mbit/s und ein Verhältniss von SCR/PCR = 0,5 sowie zum anderen Spitzenbitraten PBR = 2 Mbit/s und ein Verhältniss von SCR/PCR = 0,1 aufweisen. Als freie Übertragungskapazität auf der Verbindungsleitung wird ein Wert c = 100 Mbit/s angenommen.

Der Sigma Rule Algorithmus des Standes der Technik würde im Falle, daß die Klasse S nicht weiter unterteilt ist und die Eigenschaften der Teilklasse $S_1$ hat, die virtuellen Verbindungen, für die ein Verbindungswunsch besteht, dieser Teilklasse zuordnen. Damit werden zu 50 virtuellen Verbindungen VC mit Spitzenbitraten PBR = 2 Mbit/s 74 virtuelle Verbindungen VC mit PBR = 1 Mbit/s statistisch gemultiplext.

Der Sigma Rule Algorithmus des Standes der Technik würde im Falle, daß die Klasse S nicht weiter unterteilt ist und die Eigenschaften der Teilklasse $S_3$ hat, die virtuellen Verbindungen, für die ein Verbindungswunsch besteht, dieser Teilklasse zuordnen. Damit werden zu 50 virtuellen Verbindungen VC mit Spitzenbitraten PBR = 2 Mbit/s 69 virtuelle Verbindungen VC mit PBR = 1 Mbit/s statistisch gemultiplext.

Die besten Resultate werden mit der Zuordnung der virtuellen Verbindungen VC zu der Teilklasse $S_2$ erzeilt. In diesem Fall werden zu 50 virtuellen Verbindungen VC Spitzenbitraten PBR = 2 Mbit/s 89 virtuelle Verbindungen VC mit PBR = 1 Mbit/s statistisch gemultiplext.

Wird nun die Klasse S erfindungsgemäß in Teilklassen $S_1$, $S_2$, $S_3$ aufgeteilt, so wird der derart modifizierte Sigma Rule Algorithmus automatisch die Klasse $S_2$ auswählen.Wenn beispielsweise eine 70-te Verbindung ansteht, wird gemäß dem vorstehend Gesagten die virtuelle Verbindung bei Anwendung auf die Teilklasse $S_3$ abgewiesen. Bei Anwendung auf die Teilklassen $S_1$ sowie $S_2$ wird diese virtuelle Verbindung angenommen. Ist eine virtuelle Verbindung angenommen, so erfolgt kein weiteres Einklassifizieren in eine weitere Teilklasse. Der Verbindungsaufbau kann in diesem Fall gestartet werden.

Der Vorteil dieser Vorgehensweise gegenüber dem Stand der Technik liegt darin, daß durch die Einteilung in mehrere Teilklassen automatisch die günstigste Klasse ausgewählt wird. Die Anzahl der angenommenen virtuellen Verbindungen VC kann dann in vielen Fällen um 10 % und mehr erhöht werden gegenüber dem Algorithmus des Standes der Technik, der lediglich eine Klasse S aufgewiesen hat.

Bei vorstehendem Beispiel wurde davon ausgegangen, daß auf der Verbindungsleitung lediglich eine Übertragungsgeschwindigkeit vorgesehen war. In der Praxis ist jedoch eine Mehrzahl von Übertragungsgeschwindigkeiten vorgesehen. Ein statistischer Multiplexgewinn ist nur für solche Verbindungen erzielbar deren Spitzenzellenrate PCR unterhalb von 3 % der maximal möglichen Übertragungskapazität C der Verbindungsleitung liegt. Daraus folgt, daß für verschiedene Übertragungsgeschwindigkeiten auf der Verbindungsleitung auch verschiedene Mengen von vorgegebenen Teilklassen $S_x$ sinnvoll sind. Aus softwaremäßigen Überlegungen ist jedoch die Anzahl der vorgebbaren Teilklassen beschränkt. Für jede Übertragungsgeschwindigkeit auf einer Verbindungsleitung können somit maximal vier Teilklassen sowie die hierzu gehörigen q(c) Werten tabellarisch vorgehalten werden.

Gemäß Fig. 2 wird aufgezeigt, wie für verschiedene Übertragungsgeschwindigkeiten auf einer Verbindungsleitung die Teilklassen definiert werden. Dabei wird davon ausgegangen, daß die Übertragungsgeschwindigkeiten auf der Verbindungsleitung aufgrund internationaler Normierungen verschiedenen Interfacetypen zugeordnet sind.

Interfacetyp 1 entspricht 34,368 Mbit/s (80000 ATM Zellen pro Sekunde)
Interfacetyp 2 entspricht 44,736 Mbit/s (96000 ATM-Zellen pro Sekunde)
Interfacetyp 3 entspricht 155,520 Mbit/s (353207 ATM-Zellen pro Sekunde).

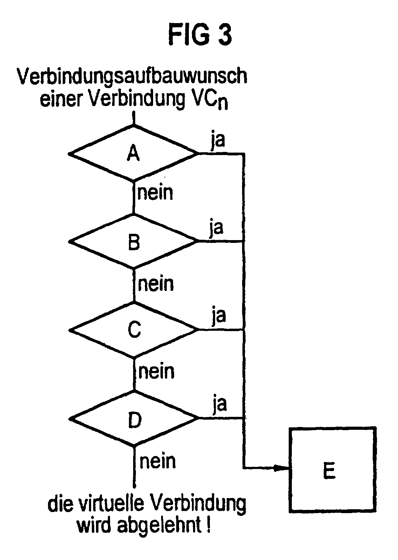

In Fig. 3 ist ein Flußdiagramm aufgezeigt, mit dem der von einer sendenden Einrichtung ausgehenden Verbindungswunsch angenommen oder abgelehnt wird.

In einem ersten Schritt A wird geprüft, ob die neu aufzubauende virtuelle Verbindung $VC_n$ mit den bereits bestehenden virtuellen Verbindungen $VC_{n-1}$ bei der Wahl der Klasse $S_1$ angenommen werden kann. Ist dies der Fall, wird diese virtuelle Verbindung $VC_n$ angenommen sowie die systeminternen Variablen für alle vier vorgegebenen Klassen $S_x$ (x = 1...4) aktualisiert (Schritt E).

Andernfalls wird in einem zweiten Schritt B geprüft, ob die neu aufzubauende virtuelle Verbindung $VC_n$ mit den bereits bestehenden virtuellen Verbindungen $VC_{n-1}$ bei der Wahl von der Klasse $S_2$ angenommen werden kann. Ist dies der Fall, wird die virtuelle Verbindung $VC_n$ angenommen sowie die Aktualisierung der entsprechenden systeminternen Variablen vorgenommen (Schritt E).

Andernfalls wird in einem dritten Schritt C geprüft, ob die neu aufzubauende virtuelle Verbindung $Vc_n$ bei der Wahl der Klasse $S_3$ angenommen werden kann. Im positiven Falle wird die Verbindung angenommen sowie die systeminternen Variablen aktualisiert (Schritt E).

Andernfalls wird in einem weiteren Schritt D diese Verbindung daraufhin überprüft, ob sie in der Klasse $S_4$ angenommen werden kann. Im positiven Fall wird die Verbindung angenommen sowie die systeminternen Variablen aktualisiert, andernfalls wird die virtuelle Verbindung $Vc_n$ komplett abgewiesen (Schritt E).

Wesentlich dabei ist allerdings, daß die systeminternen Variablen für alle Verbindungen jederzeit im Netzknoten aktualisiert gespeichert sind. Dies erfolgt dadurch,daß eine Tabelle dynamisch bei jedem Auf- bzw. Abbau einer ATM-Verbindung aktualisiert wird. In dieser Tabelle sind die Parameter PCR, SCR für jede ATM-Verbindung enthalten. Bei dem Aufbau einer ATM-Verbindung wird der neue SCR bzw. PCR-Wert zu den entsprechenden aktuellen Werten hinzuaddiert, beim Abbau einer Verbindung werden diese Werte in entsprechender Weise subtrahiert. Damit ist sichergestellt, daß im Netzknoten jederzeit die aktuellen PCR- sowie SCR-Werte vorhanden sind. Mit diesen aktuellen Werten werden dann die Berechnungen gemäß Bedingung (a) und (b) durchgeführt.

**Patentansprüche**

**1.**   Verfahren zum statistischen Multiplexen von ATM-Verbindungen, mit
einer Mehrzahl von virtuellen Verbindungen, die ATM-Zellen über eine Verbindungsleitung übertragen, und
mit weiteren, hinzukommenden Verbindungen, die nach Maßgabe von Abfragekriterien einer ersten oder zweiten Klasse S, P, zugeordnet werden,

**dadurch gekennzeichnet,**

**daß** die erste und zweite Klasse (S, P) in weitere Teilklassen $S_1$, $S_2$, $S_3$; $P_1$, $P_2$, $P_3$, unterteilt werden, und die Abfragekriterien auf jeweils eine der Teilklassen $S_1$, $S_2$, $S_3$, der Reihe nach schrittweise angewandt werden, bis eine weitere, hinzukommende Verbindung in einer Teilklasse angenommen wird oder alle Teilklassen durchlaufen sind und die virtuelle Verbindung abgelehnt.

**2.** Verfahren nach Anspruch 1,
**dadurch gekennzeichnet,**
**daß** die Abfragekriterien über eine Verknüpfung von Übertragungsparametern der Verbindungsleitung bzw. der Verbindung gebildet werden.

**3.** Verfahren nach einem der Ansprüche 1 oder 2,
**dadurch gekennzeichnet,**
**daß** die Übertragungsparameter bzw. deren Verknüpfungen untereinander in einem Netzknoten gespeichert und beim Aufbau bzw. Abbau einer ATM-Verbindung aktualisiert werden.

**Claims**

**1.** Method for statistical multiplexing of ATM links, having
a plurality of virtual connections, which transmit ATM cells via a connecting line, and
having further incoming connections, which are assigned to a first or a second class S, P, depending on question criteria,
**characterized**
**in that** the first and the second class (S, P) are subdivided into further sub-classes $S_1$, $S_2$, $S_3$; $P_1$, $P_2$, $P_3$, and the question criteria are applied successively in steps to each of the sub-classes $S_1$, $S_2$, $S_3$, until a further incoming connection is accepted in a sub-class, or all the sub-classes have been passed through and the virtual connection is rejected.

**2.** Method according to Claim 1,
**characterized**
**in that** the question criteria are formed by linking transmission parameters of the connecting line and/or of the connection.

**3.** Method according to one of Claims 1 or 2,
**characterized**
**in that** the transmission parameters and/or their links to one another are stored in a network node, and are updated when an ATM link is set up and/or cleared.

**Revendications**

**1.** Procédé de multiplexage statistique de communications ATM, comprenant
une pluralité de communications virtuelles qui transfèrent les cellules ATM au moyen d'une ligne de connexion, et
comprenant d'autres communications arrivant en plus qui sont attribuées à une première ou une deuxième classe S, P selon des critères d'interrogation,
**caractérisé en ce que**
la première et la deuxième classes (S, P) sont divisées en d'autres classes partielles $S_1$, $S_2$, $S_3$ ; $P_1$, $P_2$, $P_3$ et **en ce que** les critères d'interrogation sont respectivement appliqués à l'une des classes partielles $S_1$, $S_2$, $S_3$, successivement pas-à-pas, jusqu'à ce qu'une autre communication arrivant en plus soit acceptée dans une classe partielle ou jusqu'à ce que toutes les classes partielles soient parcourues et que la communication virtuelle soit refusée.

**2.** Procédé selon la revendication 1,
**caractérisé en ce que**
les critères d'interrogation sont formés au moyen d'une liaison de paramètres de transmission de la ligne de connexion resp. de la communication.

3. Procédé selon l'une des revendications 1 ou 2,
   **caractérisé en ce que**
   les paramètres de transmission, resp. leurs liaisons entre eux, sont mémorisés dans un noeud de réseau et actualisés lors de l'établissement resp. de la coupure d'une communication ATM.

EP 0 941 630 B1

**FIG 1**

| Klasse $S_1$ | Klasse $S_2$ | Klasse $S_3$ |
|---|---|---|
| 64 kbit/s≤PBR<2,048 Mbit/s<br>0.1≤SCR/PCR≤0.5 | 1 Mbit/s≤PBR<2,048 Mbit/s<br>0.1≤SCR/PCR≤0.5 | 64kbit/s≤PBR<4,096 Mbit/s<br>0.1≤SCR/PCR≤0.5 |
| q(c)=8.0+40 Mbit/s / c[Mbit/s] | q(c)=6.9+75 Mbit/s / c[Mbit/s] | q(c)=8.5+50 Mbit/s / c[Mbit/s] |

**FIG 2**

| Interface Typ | Unter- und Obergrenze der Klasse S (ausgedrückt in Bitraten) | q(c)- Werte q(c)=Q1+q2/c (q2 und ausgedrückt in Bitraten) |
|---|---|---|
| 1 | 64kbit/s ≤ PBR <1.024 Mbit/s | 7.4+30Mbit/s / c[Mbit/s] |
| | 64kbit/s ≤ PBR <0.512 Mbit/s | 6.9+23Mbit/s / c[Mbit/s] |
| 2 | 64kbit/s ≤ PBR <1.024 Mbit/s | 7.4+30Mbit/s / c[Mbit/s] |
| | 64kbit/s ≤ PBR <0.512 Mbit/s | 6.9+23Mbit/s / c[Mbit/s] |
| 3 | 64kbit/s ≤ PBR <1.024 Mbit/s | .7.4+30Mbit/s / c[Mbit/s] |
| | 1.024kbit/s≤ PBR<2.048 Mbit/s | 6.9+75Mbit/s / c[Mbit/s] |
| | 64kbit/s ≤ PBR <2.048 Mbit/s | 8.0+40Mbit/s / c[Mbit/s] |
| | 64kbit/s ≤ PBR <4.096 Mbit/s | 8.5+50Mbit/s / c[Mbit/s] |

# FIG 3

Verbindungsaufbauwunsch
einer Verbindung $VC_n$

```
        ┌─────────┐  ja
      ◇   A   ◇ ────────┐
        └─────────┘      │
          │ nein         │
        ┌─────────┐  ja   │
      ◇   B   ◇ ──────┐  │
        └─────────┘    │  │
          │ nein       │  │
        ┌─────────┐ ja  │  │
      ◇   C   ◇ ────┐ │  │
        └─────────┘  │ │  │
          │ nein     │ │  │
        ┌─────────┐ ja│ │  │      ┌──────┐
      ◇   D   ◇ ──┐│ │  │      │      │
        └─────────┘ └┴─┴──┴────▶│  E   │
          │ nein                 └──────┘
```

die virtuelle Verbindung
wird abgelehnt !